# EUROPEAN PATENT APPLICATION

(11) **EP 2 615 327 A1**
(43) Date of publication of application: **17.07.2013**
(21) Application number: 11823083.8
(22) Date of filing: 08.09.2011
(51) Int. Cl.: F16F 15/30

(54) **DUAL MASS FLYWHEEL ASSEMBLY**

(30) Priority: 08.09.2010 CN 201010275057
(71) Applicant: Qingdao Fengbao Car Clutch Co., Ltd., Qingdao, Shandong 266229 (CN)
(72) Inventor: Liu, Tailing, Qingdao Shandong 266229 (CN); Xing, Tiemin, Qingdao Shandong 266229 (CN); Jia, Yunsheng, Qingdao Shandong 266229 (CN)
(74) Representative: Dossmann, Gérard
(86) International application number: PCT/CN2011/079489
(87) International publication number: WO 2012/031560

(57) **Abstract**

The present invention discloses a dual mass flywheel assembly, characterized in that: a bidirection limit gap bridge bearing is provided between said flywheel disc hub and flywheel driving disc; in said bidirection limit gap bridge bearing, the outer cover thereof is fixedly connected with the inner end of the flywheel disc hub, and the inner cover thereof is fixedly connected with the flywheel driving disc. The vehicle with the dual mass flywheel assembly may enable a continuous and more stable gearshift, and upon speeding up, the dual mass flywheel assembly may further provide the function of buffering and damping, thus the service life is extended and the running safety is improved.

## Description

### Technical Field

The present invention relates to a dual mass flywheel assembly, which pertains to the technical filed of the manufacture of auto spare parts.

### Background Art

Dual mass flywheels present themselves on vehicles at the end of the 1980s. The so called dual mass flywheel means that one original flywheel is divided into two portions, one portion is retained on the original position at the side of the engine, for the start and the transmission of the rotational torque of the engine, which is referred to as the primary mass, and the other portion is placed at the side of the gearbox of the transmission system, for improving the rotational inertia of the gearbox, which is referred to as the secondary mass. Since the secondary mass is capable of improving the inertia moment of the transmission system on the precondition that the inertia moment of the flywheel is not increased, the resonance speed is made to drop below the idling speed. For instance, the engine dual mass flywheel from the LUK Co., Germany reduces the resonance speed from 1300 rpm to 300 rpm. Currently, the idling speed of vehicle generally is about 800 rpm, in other words, the resonance speed which appears in all cases is outside of the speed range of the running engine, and only when the engine just starts or stops, may the resonance speed be exceeded. The dual mass flywheel is presently the best means for vibration isolation and damping on vehicles. DE3721712C2, DE4117582A1, and DE4117579A1 etc. all relate to such a device, which since the 1990s has been widely popularized in Europe, from limousines to middle class cars, in particular diesel-powered motor vehicle. CN200710192763.0 discloses a dual mass flywheel, which dual mass flywheel consists of a primary mass which may be connected with the engine output shaft and a secondary mass which may be connected with the gearbox input part, and the primary mass and the secondary mass are positioned coaxially and in opposition to each other in the axial direction with the aid of at least one bearing device, and may twist relatively with respect to each other while being restricted, against the action of the damping device which includes an energy storage, in particular a helical compression spring. CN 200820071783.2 discloses a dual mass flywheel, which adopts the sliding bearing instead of the conventional ball bearing, the gear ring thereof is connected with the first mass casing through interference fit, the arc-shaped spring-type damping mechanism is located in the cavity of the first mass casing, the force transferring plate is riveted on the second mass disc, the bearing block is riveted with the first mass casing, the signal wheel is welded with the first mass casing, the sliding bearing is connected with the second mass disc through interference fit, and the sliding bearing is connected with the bearing block through sliding fit. While the above described various dual mass flywheels achieve considerable performance, the interconnection of the primary mass and the secondary mass thereof is not so perfect, and the price thereof as a whole is relatively expensive.

### Contents of the Invention

In view of the shortages of the prior art, the technical problem to be solved by the present invention is to provide a dual mass flywheel assembly, which may fulfill the needs of speeding up conveniently and fastly, buffering and damping, improving the service efficiency and precision.

To solve the above described technical problem, the present invention adopts the following technical solution: a dual mass flywheel assembly, comprising a flywheel driving disc, and a flywheel damping disc and a gear ring fixedly connected therewith, and a flywheel disc hub connected with the flywheel disc, a locating disc riveted with the flywheel driving disc, a spring thereof is provided among the flywheel driving disc, the flywheel disc hub, and the flywheel damping disc, there exists a damping type spring connection between the spring and the flywheel disc hub; a decoration ring is connected on the flywheel damping disc, a bidirection limit gap bridge bearing is further provided between said flywheel disc hub and flywheel driving disc; in said bidirection limit gap bridge bearing, the outer cover thereof is fixedly connected with the inner end of the flywheel disc hub, and the inner cover thereof is fixedly connected with the flywheel driving disc.

In said bidirection limit gap bridge bearing, the outer cover thereof is fixedly provided within a cavity surrounded by the flywheel disc, the inner end face of the flywheel disc hub and the pressure ring of the bidirection limit gap bridge bearing, said pressure ring of the bidirection limit gap bridge bearing is fixedly provided on the flywheel disc hub; in said bidirection limit gap bridge bearing, the inner cover thereof is fixedly connected with the bearing fixing ring which is welded on the flywheel driving disc, and is tightly pressed on the flywheel driving disc via the bearing fixing ring.

Said flywheel disc, flywheel disc hub and pressure ring of the bidirection limit gap bridge bearing are riveted together with the assembly rivet. There is further provided an assembly rivet pad between the flywheel disc and the assembly rivet.

There are further provided a friction washer, a fixing washer and a dished washer between said flywheel driving disc and the flywheel disc hub; said friction washer makes contact with the flywheel driving disc, said dished washer makes contact with the flywheel disc hub, and the fixing washer is provided between the friction washer and the dished washer.

Said spring comprises a damping spring and a secondary damping spring, the secondary damping spring is inserted within the damping spring; at the outside of said damping spring, there is provided a damping spring guard ring, said damping spring guard ring is located within the gap between the damping spring and the flywheel driving disc and the flywheel damping disc.

In the above described dual mass flywheel assembly, on the outer circumference of the flywheel driving disc, there is provided a stop opening, and the gear ring is connected with the flywheel driving disc through the stop opening.

The present invention achieves the following beneficial effects: the damping effects thereof is good, the rotational inertia is small, the gearshift is easy; the structure of the flywheel is simplified; the vibration noise is reduced, and the structure is novel, simple and reasonable. The present invention is excellent concerning driving comfortableness, vibration absorption, noise prevention, comfortableness creation, low speed driving, fuel saving, and the crankshaft and gearbox load reduction.

### Description of Figures

Next, the present invention is further described in detail in connection with the attached drawings and the embodiment thereof.

Fig. 1 is an enlarged structural illustration view in section of the embodiment of the present invention;

Fig. 2 a structural illustration view of the embodiment of the present invention;

Fig. 3 is an enlarged structural illustration view of said bidirection limit gap bridge bearing of the embodiment of the present invention.

### Mode of Carrying out the Invention

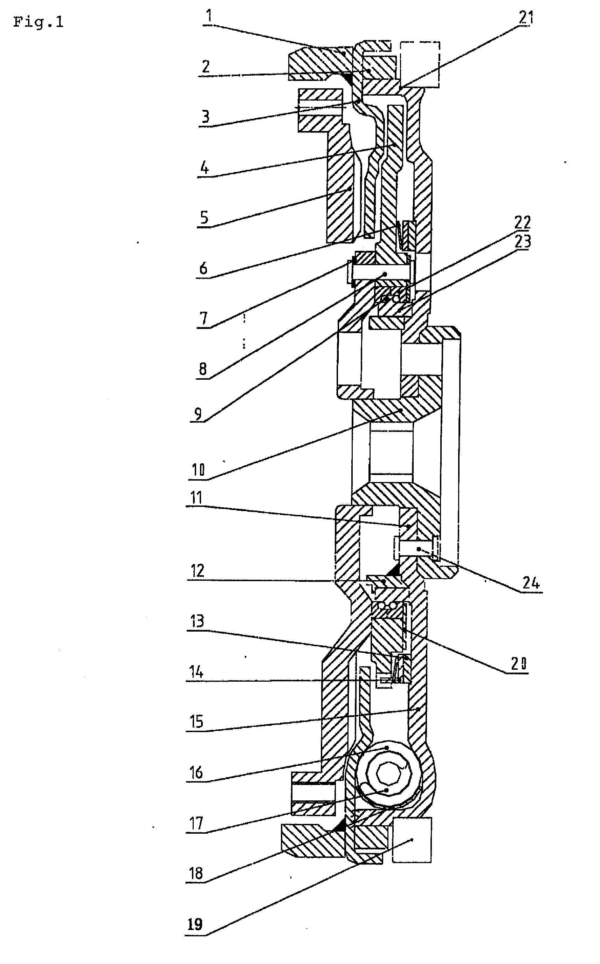

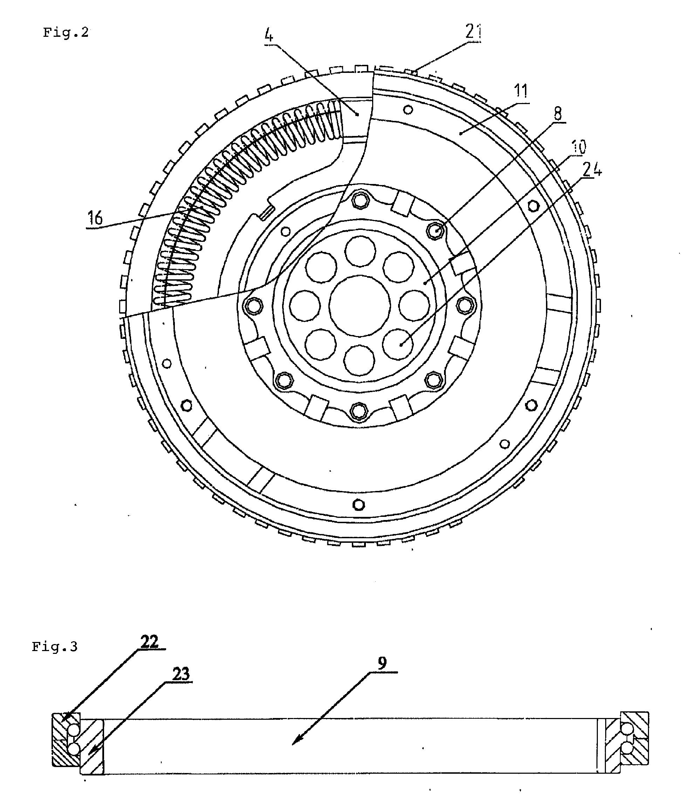

As shown in Figs. 1 and 2, a dual mass flywheel assembly comprises a spring, a flywheel driving disc 11, a locating disc 10, a flywheel damping disc 3, a flywheel disc hub 4, a flywheel disc 5, a gear ring 19, a decoration ring 1 and a bidirection limit gap bridge bearing 9. The flywheel driving disc 11 thereof is riveted with the locating disc 10 and is welded with the flywheel damping disc 3, and the flywheel damping disc 3 is welded with the decoration ring 1; on the outer circumference of the flywheel driving disc 11, there is provided a stop opening 21, and the gear ring 19 is tightly connected with the flywheel driving disc 11 through the stop opening 21; and a fastening ring 2 is surrounding the outer circumference of the flywheel driving disc 11. The flywheel disc 5, the flywheel disc hub 4 and the pressure ring 20 of the bidirection limit gap bridge bearing are riveted together with an assembly rivet 8, and there is provided an assembly rivet pad 7 between the flywheel disc 5 and the assembly rivet 8. A friction washer 13, a fixing washer 14 and a dished washer 6 are provided between the flywheel disc hub 4 and the flywheel driving disc 11, said friction washer 13 makes contact with the flywheel driving disc 11, said dished washer 6 makes contact with the flywheel disc hub 4, and the fixing washer 14 is provided between the friction washer 13 and the dished washer 6; and a bidirection limit gap bridge bearing 9 is further provided between the inside of the flywheel disc hub 4 and the flywheel driving disc 11.

As shown in Fig. 3, said bidirection limit gap bridge bearing 9 comprises an outer cover 22 and an inner cover 23, and the outer cover 22 thereof consists of separate, corresponding two portions. A rolling part exists between the outer cover 22 and the inner cover 23.

As shown in Fig. 1, the outer cover 22 of said bidirection limit gap bridge bearing 9 is fixedly provided within the cavity that is surrounded by the flywheel disc 5, the inner end face of the flywheel disc hub 4 and the pressure ring 20 of the bidirection limit gap bridge bearing, the pressure ring 20 of said bidirection limit gap bridge bearing is fixedly provided on the flywheel disc hub 4; and the inner cover 23 of said bidirection limit gap bridge bearing 9 is fixedly connected with the bearing fixing ring 12 that is welded on the flywheel driving disc 11, and is tightly pressed on the flywheel driving disc 11 through the bearing fixing ring 12.

As shown in Fig. 1, the spring thereof is provided among the flywheel driving disc 11, the flywheel disc hub 4, and the flywheel damping disc 3, the connection of the flywheel disc hub 4 and the spring is the damping type spring sliding connection. The spring comprises a damping spring 16 and a secondary damping spring 17, and the secondary damping spring 17 is inserted within the damping spring 16; at the outside of said damping spring 16, there is provided a damping spring guard ring 18, and said damping spring guard ring 18 is located within the gap between the damping spring 16 and the flywheel driving disc 11 and the flywheel damping disc 3.

The assembly process of the dual mass flywheel assembly according to the present embodiment is as follows: first, the bearing fixing ring 12 is welded onto the flywheel driving disc 11, then the locating disc 10 and the flywheel driving disc 11 are riveted together with a positioning rivet 24, the secondary damping spring 17 is disposed in the damping spring 16, the damping spring 16 and the damping spring guard ring 18 are disposed at the corresponding positions on the flywheel driving disc 1, and the friction washer 13, the fixing washer 14, the dished washer 6, the bearing pressure ring 20 are disposed on the flywheel driving disc 11. Then, the bidirection limit gap bridge bearing 9 is mounted, the outer cover 22 of the bidirection limit gap bridge bearing 9 is set within the inner end of the flywheel disc hub 4, the inner cover of the bidirection limit gap bridge bearing 9 are jointed with the flywheel driving disc 11, and the bearing fixing ring 12, and the outer end of the bearing fixing ring 12 is pressing riveted. Then, the flywheel damping disc 3 and the flywheel driving disc 11 are welded, the decoration ring 1 is disposed on the flywheel damping disc 3 to be fixedly welded, and the assembly rivet 8 is passed through the flywheel disc 5, the flywheel disc hub 4 and the pressure ring 20 of the bidirection limit gap bridge bearing, and the assembly rivet pad 7 is disposed thereon to be riveted. The fastening ring 2 is wrapped over the flywheel driving disc 11, and finally the gear ring 19 is set within the position of the stop opening 21 on the outer circumference of the flywheel driving disc 11.

According to the dual mass flywheel assembly of the present embodiment, due to the unique design of the gear ring stop opening on the outer circumference of the flywheel driving disc, the width and position of the flywheel driving disc outer circumference gear ring may be freely set according to the requirement of the position of the engine, without affecting the total height and function of the flywheel driving disc. Furthermore, the vehicle with the dual mass flywheel assembly may enable a continuous and more stable gearshift, and upon speeding up, the dual mass flywheel assembly may further provide the function of buffering and damping, thus the service life is extended and the running safety is improved.

## Claims

1. A dual mass flywheel assembly, comprising a flywheel driving disc, and a flywheel damping disc and a gear ring fixedly connected therewith, and a flywheel disc hub connected with the flywheel disc, a locating disc riveted with the flywheel driving disc, a spring thereof is provided among the flywheel driving disc, the flywheel disc hub, and the flywheel damping disc, there exists a damping type spring connection between the spring and the flywheel disc hub; a decoration ring is connected on the flywheel damping disc, **characterized in that**: a bidirection limit gap bridge bearing is provided between said flywheel disc hub and flywheel driving disc; in said bidirection limit gap bridge bearing, the outer cover thereof is fixedly connected with the inner end of the flywheel disc hub, and the inner cover thereof is fixedly connected with the flywheel driving disc.

2. A dual mass flywheel assembly according to claim 1, **characterized in that**: in said bidirection limit gap bridge bearing, the outer cover thereof is fixedly provided within a cavity surrounded by the flywheel disc, the inner end face of the flywheel disc hub and the pressure ring of the bidirection limit gap bridge bearing, said pressure ring of the bidirection limit gap bridge bearing is fixedly provided on the flywheel disc hub; in said bidirection limit gap bridge bearing, the inner cover thereof is fixedly connected with the bearing fixing ring which is welded on the flywheel driving disc, and is tightly pressed on the flywheel driving disc via the bearing fixing ring.

3. A dual mass flywheel assembly according to claim 2, **characterized in that**: said flywheel disc, flywheel disc hub and pressure ring of the bidirection limit gap bridge bearing are riveted together with the assembly rivet.

4. A dual mass flywheel assembly according to claim 3, **characterized in that**: there is further provided an assembly rivet pad between the flywheel disc and the assembly rivet.

5. A dual mass flywheel assembly according to claim 3, **characterized in that**: there are further provided a friction washer, a fixing washer and a dished washer between said flywheel driving disc and the flywheel disc hub; said friction washer makes contact with the flywheel driving disc, said dished washer makes contact with the flywheel disc hub, and the fixing washer is provided between the friction washer and the dished washer.

6. A dual mass flywheel assembly according to claim 3, **characterized in that**: said spring comprises a damping spring and a secondary damping spring, the secondary damping spring is inserted within the damping spring; at the outside of said damping spring, there is provided a damping spring guard ring, said damping spring guard ring is located within the gap between the damping spring and the flywheel driving disc and the flywheel damping disc.

7. A dual mass flywheel assembly according to claim 3, **characterized in that**: on the outer circumference of the flywheel driving disc, there is provided a stop opening, and the gear ring is connected with the flywheel driving disc through the stop opening.
